Europäisches Patentamt

(19) **European Patent Office**

**Office européen des brevets**

(11) Numéro de publication: **0 245 249**
**B1**

(12) **FASCICULE DE BREVET EUROPÉEN**

(45) Date de publication du fascicule du brevet:
28.02.90

(51) Int. Cl. 5: **H 04 L 12/00, H 04 J 3/06**

(21) Numéro de dépôt: 85905833.1

(22) Date de dépôt: 21.11.85

(86) Numéro de dépôt international:
PCT/FR 85/00327

(87) Numéro de publication international:
WO 87/03443 (04.06.87 Gazette 87/12)

(54) PROCEDE DE TRANSMISSION D'INFORMATIONS SYNCHRONE ET DECENTRALISE, ET RESEAU DE TRANSMISSION D'INFORMATIONS UTILISANT CE PROCEDE.

(43) Date de publication de la demande:
19.11.87 Bulletin 87/47

(45) Mention de la délivrance du brevet:
28.02.90 Bulletin 90/09

(84) Etats contractants désignés:
CH DE GB IT LI NL SE

(56) Documents cité:
CA-A-1 158 739

International Conference on Communications 80, vol. 2, 8-12 June 1980, Seattle (US) P. Spilling et al.:"Digital voice communications in the packet radio network", pages 21.4.1-21.4.7

Compcon Fall 78, 5-8 September 1978, New-York (US)R. Weissler et al.: "Synchronization and multiple access protocols in the initial satellite IMP" pages 356-362

Infocom 85, 26-28 March 1985, New-York (US) J. Jubin: "Current packet radio network protocols", pages 86-92

(73) Titulaire: THOMSON-CSF
51, Esplanade du Général de Gaulle
F-92800 Puteaux (FR)

(72) Inventeur: DE BOISSERON, Bertrand
75, rue du Rocher
F-75008 Paris (FR)
Inventeur: SALVAN, Michel
14, rue du Breuil
F-91360 Epinay s/Orge (FR)
Inventeur: GUGENHEIM, Michèle
26, rue de Vouillé
F-75015 Paris (FR)

(74) Mandataire: Benoit, Monique
THOMSON-CSF SCPI
F-92045 PARIS LA DEFENSE CEDEX 67 (FR)

LIBERGRAF, STOCKHOLM 1990

2

## Description

La présente invention a pour objet un procédé et un réseau de transmission d'informations entre un certain nombre de stations susceptibles d'émettre et de recevoir des informations appelées "participants", de type décentralisé.

Lorsqu'il existe une pluralité de matériels fixes ou mobiles mis en oeuvre dans le cadre d'une même application, il se pose un problème d'interconnexion de ces équipements et, par suite, un problème de gestion des échanges sur le réseau d'interconnexion, ainsi que celui de la sûreté du fonctionnement de l'ensemble.

Il est connu de résoudre ces problèmes à l'aide d'un système dans lequel la gestion des échanges d'informations est centralisée, c'est-à-dire qu'il existe une unité dite "maître" qui commande les échanges entre les différents équipements, généralement appelés "esclaves", et qui vérifie leur fonctionnement. Les inconvénients d'un tel système sont de deux ordres: tout d'abord la centralisation provoque un effet de goulot d'étranglement limitant le débit d'informations sur l'ensemble du système; ensuite, une panne de la seule unité "maître" entraîne de façon définitive la panne de l'ensemble du système.

Parmi les systèmes connus, on peut citer celui qui est décrit par l'article intitulé "Synchronization and Multiple Access Protocols in the Initial Satellite IMP" de Robert Weissler, Richard Binder, Robert Bressler, Randall Rettberg, David Walden paru dans la Revue COMPCON FALL 78; ce système est un réseau synchrone de liaisons en multiplexage temporel entre une pluralité de satellites. Un autre système connu est décrit dans le brevet canadien 1 158 739; le réseau fonctionne suivant le principe de la gestion centralisée et comporte un système de synchronisation automatique.

La présente invention a pour objet un réseau de transmission d'informations entre différents participants qui permette d'éviter les inconvénients précédents grâce à une gestion décentralisée des échanges. A cet effet, les liaisons entre deux participants sont bidirectionnelles et les communications se font à la même fréquence sur un principe de multiplexage temporel: les différents participants disposent d'un ou de plusieurs créneaux temporels d'émission prédéfinis à l'intérieur d'un cycle, les messages ainsi émis étant à destination d'un ou de plusieurs participants. Le réseau est donc synchrone et décentralisé, dans la mesure où chacun des participants a, à tour de rôle, le droit à émettre, sans qu'il y ait de désignation ou de contrôle d'un "maître" prédéfini.

Plus précisément, l'invention a pour objet un procédé de transmission d'informations tel que défini par la revendication 1.

D'autres objets, particularités et résultats de l'invention ressortiront de la description suivante, donnée à titre d'exemple non limitatif et illustrée par les dessins annexés, qui représente:

- les figures 1, a, b, c, d, différents exemples de configuration du réseau selon l'invention;
- la figure 2, un exemple de répartition des créneaux temporels d'émission entre les différents participants dans le réseau selon l'invention;
- la figure 3, un exemple de format de message utilisé dans le réseau selon l'invention.

Sur ces différentes figures, les mêmes références se rapportent aux mêmes éléments.

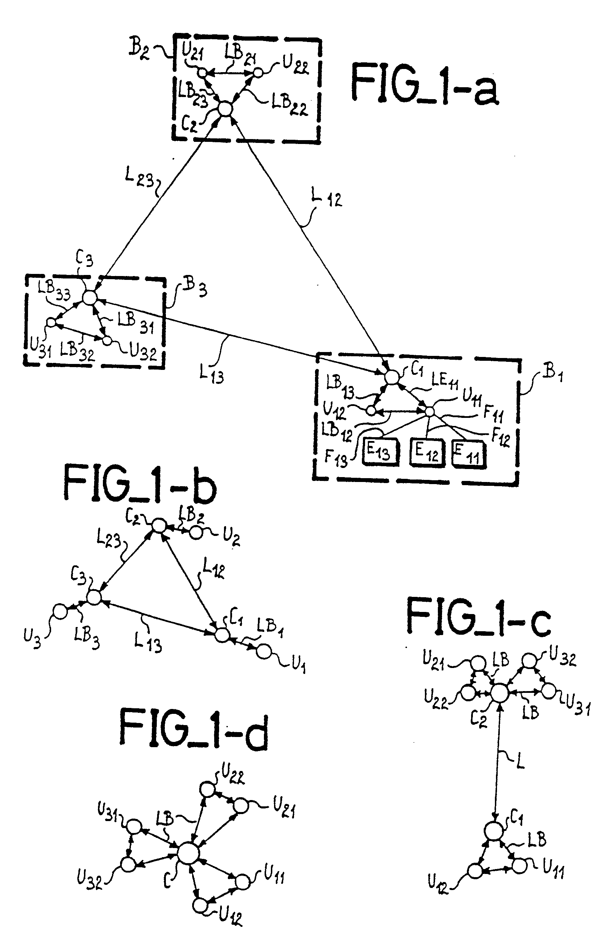

Sur la figure 1a, on a représenté à titre d'exemple une première configuration possible du réseau selon l'invention.

Dans cet exemple, le réseau relie un certain nombre de stations émettrices et réceptrices, appelées "participant", à savoir trois participants $C_1$, $C_2$ et $C_3$ reliés en triangle par l'intermédiaire de liaisons repérées respectivement $L_{12}$, $L_{23}$, $L_{13}$ et six participants repérés $U_{12}$, $U_{11}$, $U_{21}$, $U_{22}$, $U_{31}$ et $U_{32}$ qui sont reliés les uns aux autres par l'intermédiaire d'un participant du type C les liaisons reliant les stations entre elles et à une station C sont repérées LB, par exemple $LB_{11}$ reliant les participants $U_{11}$ et $C_1$, $LB_{12}$ reliant $U_{11}$ et $U_{12}$ et $LB_{13}$ reliant $U_{12}$ et $C_1$. Toujours dans cet exemple, chacun des participants du type C est relié à deux participants de type U pour former une unité B; on a représenté ainsi trois unités $B_1$, $B_2$, $B_3$ sur la figure 1a.

Les liaisons L et LB sont de type quelconque; elles sont par exemple des liaisons hertziennes; elles ne sont d'ailleurs pas obligatoirement de même type. Chacun des participants de type U (et, éventuellement, les participants de type C) est par exemple relié à des équipements E: sur la figure, la station $U_{11}$ est reliée à des équipements repérés respectivement $E_{11}$, $E_{12}$, $E_{13}$ par l'intermédiaire de liaisons $F_{11}$, $F_{12}$ et $F_{13}$ respectivement, qui peuvent être par exemple des liaisons filaires. Les participants de type U sont par exemple des véhicules portant des systèmes d'arme ou des moyens de détection les équipement E peuvent être des équipements électroniques installés dans chacun des participants U. Les participants de type C peuvent être des éléments, également mobiles, de gestion des participants de type U qui lui sont rattachés, l'ensemble d'un participant C et de ses participants U formant une unité B présentant une autonomie complète.

La figure 1b, représente un autre exemple de configuration du réseau selon l'invention, dans lequel on retrouve trois participants du type C ($C_1$, $C_2$, $C_3$) reliés entre eux en triangle par des liaisons L. A chacun des participants C est relié à titre d'exemple un seul participant U par l'intermédiaire d'une liaison LB, respectivement $U_1$ relié à $C_1$ par $LB_1$, $U_2$ a $C_2$ par $LB_2$ et $U_3$ a $C_3$ par $LB_3$. Les participants U et/ou les participants C peuvent être reliés comme précédemment à des équipements E.

La figure 1c, représente un autre exemple de réseau dans lequel deux participants $C_1$ et $C_2$ sont reliés par une liaison L. Au participant $C_1$

sont reliés deux ensembles de participants U: $U_{21}$, $U_{22}$ reliés entre eux et à $C_2$ en triangle, et $U_{31}$, $U_{32}$ reliés entre eux et à $C_2$ en triangle également, par des liaisons LB.

La figure 1d, représente une autre variante de réseau dans laquelle un seul participant du type C est relié à trois groupes de participants de type U, chacun des participants d'un groupe étant relié de façon triangulaire au participant C par des liaisons LB comme précédemment.

Le fonctionnement du réseau selon l'invention, est décrit ci-après en faisant à titre d'exemple référence à la figure 1a.

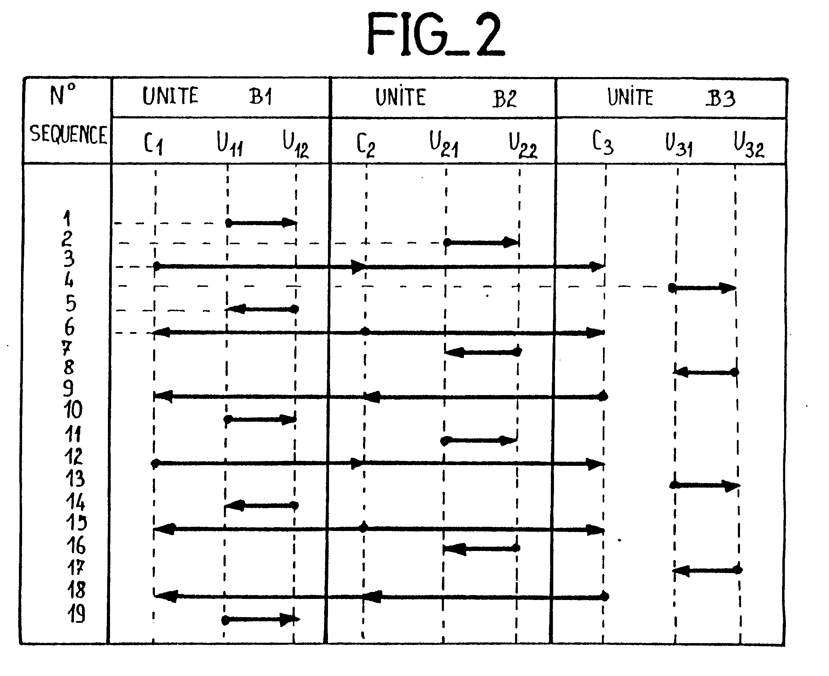

Ainsi qu'il a été dit ci-dessus, les liaisons entre les participants C et/ou U sont par exemple de type hertzien; elles sont dans ce cas omnidirectionnelles; elles s'effectuent à la même fréquence selon un multiplexage temporel prédéfini tel que représenté à titre d'exemple sur la figure 2.

Sur cette figure, on a représenté un tableau à double entrée horizontalement, les différents participants regroupés en unités $B_1$, $B_2$, $B_3$, qui sont successivement émetteur (représenté par un petit cercle), récepteur (représenté par une fleche) et passif; verticalement, la succession dans le temps des créneaux d'émission, ou "séquences", numérotés.

Sur la première ligne du tableau, on a représenté une première étape, ou séquence n° 1, dans laquelle c'est le participant $U_{11}$ et lui seul qui a le droit d'émettre et, ce, à l'intention d'un seul autre participant, qui est $U_{12}$. Dans l'étape suivante, séquence n° 2 représentée à la deuxième ligne du tableau, c'est seulement le participant $U_{21}$ qui a le droit d'émettre et, ce, à l'intention encore d'un seul autre participant, à savoir $U_{22}$. Dans l'étape suivante (séquence n° 3), c'est le participant $C_1$ qui a le droit d'émettre et, ce, à l'intention de deux autres participants, à savoir $C_2$ et $C_3$.

Il apparaît ainsi qu'on découpe le temps en séquences (les lignes du tableau précédent, et, lors de chaque séquence, un seul participant a le droit d'émettre, à l'intention d'un ou plusieurs autres participants, mais de façon prédéfinie à la fois quant à l'instant d'émission et quant à l'adresse du ou des destinataires. L'ensemble d'un certain nombre de séquence constitue un cycle, qui se répète dans le temps. Il est toutefois possible de définir plusieurs cycles distincts en fonction des rôles des différents participants et des débits d'information prévus sur les différentes liaisons, lé type de cycle sélectionné étant transmis à tous les participants lors de l'initialisation du système.

A titre d'exemple, la durée d'une séquence est de 0,512 ms et un cycle comporte 36 séquences.

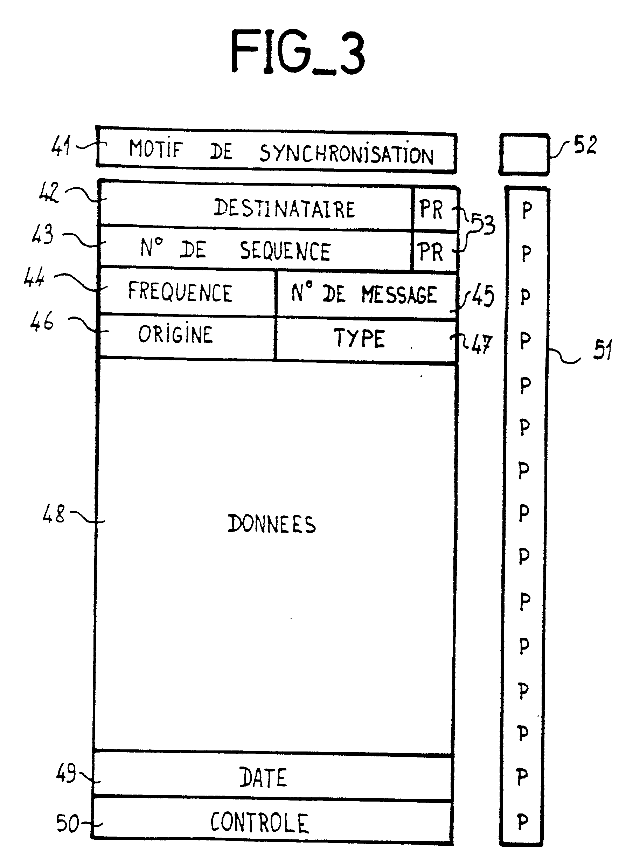

La figure 3 représente un exemple du format des informations qui sont échangées sur un réseau selon l'invention.

Si on se rapporte à la figure 1a, on voit que les informations qu'un participant, tel que $U_{11}$ par exemple, souhaite transmettre à un autre participant lui sont fournies par des équipements E.

Ceux-ci fournissent, outre les informations utiles ou "données", un mot de commande indiquant un certain nombre d'informations de service comme l'adresse du ou des destinataires, le degré d'urgence et/ou d'importance de la transmission, notamment. Le participant $U_{11}$ met alors en forme ces données et ce mot de commande, assortis d'un certain nombre de renseignements auxiliaires, pour constituer le "message" représenté figure 3.

Ce message a une durée fixe qui est inférieure à la durée allouée pour une séquence, à savoir dans l'exemple numérique précédent 0,512 ms pour la séquence et 0,230 ms pour le message. Toujours dans l'exemple précédent, il se présente sous la forme d'informations binaires et il est découpé en zones numérotées sur les figures 41 à 53.

Le message comporte donc une première zone 41 dans laquelle est inscrit un motif de synchronisation, constitué par exemple par un code PN de durée égale à celle d'un octet. Elle est suivie par une zone 52, comportant un seul bit permettant d'initialiser le décodage des bits suivants. On trouve ensuite une zone 42 où est incrité l'adresse du destinataire par exemple sur 7 bits, le dernier bit de l'octet étant utilisé pour indiquer la priorité du message (zone 53). Cette zone est suivie par une zone 43 indiquant le numéro de la séquence considérée, encore sur 7 bits, le dernier bit de l'octet étant également utilisé pour la priorité (zone 53). Le message comporte ensuite, dans ce mode de réalisation, une zone 44 destinée le cas échéant à indiquer qu'elle sera la fréquence d'émission utilisée pour les prochains messages, dans le cas où celle-ci n'est pas constante. On trouve ensuite une zone 45 où est indiqué le numéro du message considéré en effet, sur une liaison déterminée, les messages sont émis et numérotés dans l'ordre de leur émission par chaque participant, ce qui permet au participant destinataire de vérifier que tous les messages lui sont arrivés et de demander le cas échéant une retransmission. On trouve ensuite une zone 46 indiquant l'adresse du participant ou éventuellement de l'équipement origine du message. Elle est suivie par une zone 47 indiquant le type du message en effet, dans ce mode de réalisation, les données susceptibles d'être transmises sont listées en un certain nombre de types et il est prévu un format particulier pour chaque type de données la connaissance du type permet ainsi le décodage des données. A titre d'exemple, les zones 44 à 47 occupent deux octets. On trouve ensuite une zone 48 réservée aux données, puis une zone 49 réservée à des informations de datation, indiquant l'ancienneté du message dans le réseau, permettant ainsi, le cas échéant, d'actualiser les données cette zone 49 occupe par exemple un octet. Le message se termine par une zone somme 50 dans laquelle est réalisée la somme de chaque colonne, à des fins de contrôle (technique connue sous le nom anglais de "check sum"). Par ailleurs, on a isolé une colonne 51 constituée par un bit placé à droite de chacun des octets précédents, permettant un contrôle de parité de chaque ligne.

Le fonctionnement d'un tel réseau commence par une phase d'initialisation qui se déroule selon la procédure suivante.

Dans une première étape, tous les participants sont en position d'écoute. L'un de ces participants, désignés par un opérateur et appelé participant origine, se voit confié une fonction de maître pour l'initialisation, c'est-a-dire qu'il est le premier à pouvoir émettre. Il est à noter que tout participant pourrait être ainsi désigné.

L'étape suivante consiste à acquérir une synchronisation grossière: tous les participants sont donc à l'écoute et ceux qui reçoivent l'émission du maître synchronisent leur horloge sur le top de réception du message, en ce qui concerne le numéro de séquence. Cette synchronisation n'est que grossière parce qu'elle comporte une erreur systématique (Δt) correspondant au temps de propagation du message du maître vers le participant esclave, c'est-à-dire à la distance entre les deux stations.

Pour corriger cette erreur, on procède ensuite à une étape de synchronisation fine qui consiste, pour l'esclave, à envoyer un message vers le maître. Le maître reçoit ce message et constate qu'il est décalé de Δt par rapport à sa synchronisation propre et informe, par un nouveau message, la station esclave de la valeur de cette durée Δt. A réception de ce message, l'esclave d'une part corrige sa synchronisation de Δt et, d'autre part, mémorise l'information sur la distance qui le sépare de son maître, qu'il vient ainsi de recevoir.

La synchronisation est faite de la sorte de proche en proche entre tous les participants, l'esclave synchronisé sur un maître devenant à son tour maître pour un participant non encore synchronisé. Ainsi qu'il a été dit ci-dessus, le réseau selon l'invention est du type synchrone et il est donc nécessaire que les différents participants soient synchronisés entre eux et le restent. Dans un mode de réalisation, il est prévu un entretien de la synchronisation, pour prévenir une éventuelle dérive des horloges de chacun des participants les unes par rapport aux autres cet entretien s'effectue par exemple de la façon suivante:

- chaque participant se synchronise sur chacun des messages reçus de son maître de façon analogue à l'étape de synchronisation fine décrite ci-dessus, c'est-à-dire qu'il se synchronise sur le top de réception du message, corrigé de la grandeur Δt mémorisée;
- périodiquement, les grandeurs Δt sont actualisées selon le processus décrit ci-dessus, c'est-à-dire par un échange de messages spécifiques. A titre d'exemple, cette actualisation intervient environ toutes les secondes.

Lorsque la liaison d'un esclave vers son maître s'avère défectueuse selon des critères définis ci-après, l'esclave se met en phase de recherche de synchronisation sur un autre participant, qui devient alors son maître.

Il est à noter que la notion de maître-esclave utilisée ci-dessus n'est utilisée que pour la synchronisation des participants et n'intervient en rien sur la gestion du droit à émettre. Enfin, en cas d'arrêt de fonctionnement du participant origine de l'initialisation, cela n'entraîne pas de panne définitive du réseau: en effet, le processus est repris en phase d'initialisation avec un autre participant choisi comme maître.

L'acheminement, ou routage, des messages d'un participant origine à un participant destinataire se fait de la façon suivante. Comme il est dit plus haut, chacun des participants effectue des contrôles de parité et des contrôles sur les numéros de message sur chacun des messages utiles reçus il utilise ces contrôles pour faire des statistiques sur la qualité de chaque liaison qui le relie à un autre participant. Il existe également des contrôles de densité d'émission sur chaque liaison. Dans le cas ou cette densité est inférieure à un certain seuil prédéterminé, les participants concernés émettent des messages de remplissage afin que les statistiques de qualité précédentes puissent continuer à être faites. Ces statistiques de qualité remontent vers la station qui a permis l'initialisation du processus de sychronisation. Ce participant centralise les différentes informations de qualité, et les renvoie vers chacun des participants, chaque participant calculant alors lui-même le routage des messages qu'il envoie. Lorsqu'un message part d'un participant origine, il emprunte le chemin optimal jusqu'à un participant intermédiaire, lequel modifie éventuellement le chemin initialement choisi en fonction des mises à jour de routage qu'il a pu recevoir, et ainsi de suite jusqu'à la destination finale du message.

Ces statistiques de qualités peuvent être échangées soit seulement en cas de modification, soit périodiquement, par exemple avec une période de l'ordre de la seconde dans l'exemple numérique précédent.

On a ainsi d'écrit un réseau synchrone décentralisé à multiplexage temporel, dans lequel chaque participant a le droit d'émettre selon un séquencement prédéfini. Il a notamment l'avantage d'être très adaptable aux applications envisagées, du fait que le seul changement du séquencement permet de modifier la distribution des informations sur les différentes liaisons du réseau.

**Revendications**

1. Procédé de transmission d'informations entre une pluralité de stations, appelées participants, susceptibles d'émettre et/ou de recevoir les informations, les informations étant émises par les participants en multiplexage temporel, chacun des participants ayant une durée d'émission prédéfinie à l'intérieur d'une période de temps, appelée cycle, le procédé comportant au moins une étape de synchronisation initiale des participants entre eux, et préalablement à l'émission d'informations, une étape de routage, déterminant le participant destinataire des informations à émettre en fonction de la destination finale de ces informations et de la qualité des liaisons entre participants, le procédé étant caractérisé par le fait qu'un cycle est divisé en séquences que, pour chaque séquence, un seul participant peut émettre à l'intention d'au moins un participant, de façon prédéfinie à la fois quant à l'instant d'émission dans le cycle et l'adresse du participant destinataire et que plusieurs cycles distincts peuvent être définis en fonction des rôles des différents participants et des débits d'information prévus sur les différentes liaisons, le type de cycle sélectionné étant transmis à tous les participants lors de l'étape de synchronisation initiale.

2. Procédé selon la revendication 1, caractérisé par le fait que l'étape de synchronisation initiale des participants entre eux s'effectue à partir d'un participant pris comme origine, chacun des participants recevant le participant origine, dit participant de premier type, se synchronisant dans un premier temps sur la réception d'un premier message émis par le participant origine puis, dans un deuxième temps, corrigeant cette synchronisation du temps de parcours d'un message entre le participant origine et lui-même, temps qui est déterminé par le participant origine sur réception d'un deuxième message émanant du participant de premier type.

3. Procédé selon la revendication 2, caractérisé par le fait que ceux des participants, dits participants de deuxième type, autre que le participant origine et les participants de premier type, qui reçoivent l'émission d'un participant de premier type, se synchronisent sur les participants de premier type comme ceux-ci sur le participant origine, et ainsi de suite, de proche en proche, jusqu'à ce que tous les participants soient synchronisés.

4. Procédé selon la revendication 3, caractérisé par le fait qu'il comporte une étape d'entretien de la synchronisation qui consiste, pour chaque participant, à se synchroniser sur chaque mes sage qu'il reçoit du participant qui a assuré sa synchronisation initiale, en corrigeant cette synchronisation du temps de parcours qu'il a mémorisé.

5. Procédé selon la revendication 4, caractérisé par le fait qu'il comporte une étape d'actualisation du temps de parcours.

6. Procédé selon l'une des revendications précédentes, caractérisé par le fait qu'il comporte une étape supplémentaire d'élaboration, par chacun des participants, de statistiques de qualité des liaisons auxquels il est rattaché, suivie par une étape de transmission de ces statistiques à un même participant, suivie par une étape de transmission de ces statistiques à l'ensemble des participants.

7. Procédé selon la revendication 6, caractérisé par le fait que l'étape de routage est réalisée par consultation d'une table de routage, élaborée par chaque participant à réception des statistiques, et donnant les meilleurs chemins entre les participants en fonction de la qualité des liaisons.

**Patentansprüche**

1. Verfahren zur Übermittlung von Informationen zwischen einer Vielzahl von Stationen, Teilnehmer genannt, welche Informationen senden und/oder empfangen können, wobei die Informationen von den Teilnehmern im Zeitmultiplexmode gesendet werden und jeder Teilnehmer innerhalb einer Zeitperiode, Zyklus genannt, über eine vorausbestimmte Sendedauer verfügt, wobei das Verfahren mindestens eine Startsynchronisierungsphase für die Teilnehmer untereinander, sowie vor der Aussendung von Informationen eine Leitweglenkungsphase aufweist, welche in Abhängigkeit vom Ziel dieser Informationen und der Qualität der Verbindungen zwischen Teilnehmern den empfangenden Teilnehmer für die zu sendenden Informationen bestimmt, dadurch gekennzeichnet, daß ein Zyklus in Folgen unterteilt ist, die jeweils ein einzelner Teilnehmer an mindestens einen anderen Teilnehmer in einer vorherbestimmten Weise, was den Zeitpunkt des Sendens innerhalb des Zyklus und die Adresse des Empfängers anbetrifft, senden kann, und daß mehrere unterschiedliche Zyklen in Abhängigkeit von der Rolle der verschiedenen Teilnehmer und der für die verschiedenen Verbindungen vorgesehenen Informationsdatenmengen bestimmt werden können, wobei der gewählte Zyklustyp während der Startsynchronisierungsphase an alle Teilnehmer übertragen wird.

2. Verfahren nach Anspruch 1, dadurch gekennzeichnet, daß die Startsynchronisierungsphase der Teilnehmer untereinander ausgehend von einem Teilnehmer als Ursprung abgewickelt wird, wobei jeder der Teilnehmer, der den Ursprungsteilnehmer empfängt, Teilnehmer des ersten Typs genannt, sich in einem ersten Schritt auf den Empfang einer ersten vom Ursprungsteilnehmer gesendeten Nachricht synchronisiert und dann in einem zweiten Schritt die Synchronisation um die Laufzeit einer Nachricht zwischen dem Ursprungsteilnehmer und ihm selber korrigiert, wodurch diese Laufzeit vom Ursprungsteilnehmer aufgrund des Empfangs einer zweiten Nachricht vom Teilnehmer des ersten Typs bestimmt wird.

3. Verfahren nach Anspruch 2, dadurch gekennzeichnet, daß diejenigen Teilnehmer, Teilnehmer des zweiten Typs genannt, die nicht der Ursprungsteilnehmer und die Teilnehmer des ersten Typs sind und die die Sendung von einem ersten Teilnehmer empfangen, sich mit den Teilnehmern des ersten Typs ebenso synchronisieren, wie diese sich mit dem Ursprungsteilnehmer synchronisieren, usw., von einem zum nächsten Teilnehmer, bis alle Teilnehmer synchronisiert sind.

4. Verfahren nach Anspruch 3, dadurch gekennzeichnet, daß es eine Synchronisations-Erhaltungsphase aufweist, die darin besteht, daß sich jeder Teilnehmer auf jede Nachricht sychronisiert, die er von demjenigen Teilnehmer empfängt, der seine Startsynchronisierung bewirkt hat, indem er diese Synchronisation um die Laufzeit korrigiert, die er gespeichert hat.

5. Verfahren nach Anspruch 4, dadurch gekennzeichnet, daß es eine Aktualisierungsphase für die Laufzeit aufweist.

6. Verfahren nach einem der vorhergehenden Ansprüche, dadurch gekennzeichnet, daß es eine zusätzliche Phase der Erstellung durch jeden Teilnehmer von Qualitätsstatistiken über die Verbindungen aufweist, an die er angeschlossen ist, und daß sich an diese Phase eine Phase der Übermittlung dieser Statistiken an einen gemeinsamen Teilnehmer anschließt, gefolgt von einer Phase der übermittlung dieser Statistiken an alle Teilnehmer.

7. Verfahren nach Anspruch 6, dadurch gekennzeichnet, daß die Leitweglenkungsphase durch Konsultation einer Leitwegtabelle erfolgt, die von jedem Teilnehmer bei Empfang der Statistiken erstellt wird und in Abhängigkeit von der Qualität der Verbindungen die besten Verbindungswege zwischen den Teilnehmern angibt.

**Claims**

1. A method for transmitting information between a plurality of stations, referred to as participants, susceptible of transmitting and/or receiving the informations, said information being transmitted by the participants in time-multiplex mode, with each of the participants disposing of a predefined transmission time duration comprised within a given time period, referred to as cycle, the method including at least one step of initial synchronization of the participants among themselves and, prior to the transmission of the informations, a routing phase used to determine the participant intended to receive of the informations to be transmitted, as a function of the final destination of said informations and of the quality of the communication links existing between participants, characterized in that a cycle is subdivided into sequences, that for each sequence, one participant only is enabled to transmit to at least one other participant in a predefined manner as concerns both the instant of transmission within the cycle and the address of the addressed participant, and that a plurality of distinct cycles may be defined according to the role of the different participants and to the information flow rate provided for said different communication links, the type of selected cycle being transmitted to all the participants during the phase of initial synchronization.

2. A method according to claim 1, characterized in that the phase of initial synchronization of the participants among themselves is implemented in starting with one participant taken as a reference of origin, with each of the participants receiving the originating participant and referred to as first type participant, entering into synchronism as a first step when receiving a first message transmitted by the originating participant, and then, as a second step, correcting said synchronization in accordance with the transmission delay required for a message to be transmitted between the originating participant and said participant, which delay is determined by the originating participant upon reception of a second message sent by the first type participant.

3. A method according to claim 2, characterized in that participants, referred to as second type participants, who are different from the originating participant and the first type participants and who receive the transmitted information of a first type participant enter into synchronism with the first type participants, as the latter do with the originating participant, and so on, next one to next one, until all of the participants operate in synchronism.

4. A method according to claim 3, characterized in that it comprises a synchronization maintenance phase which consists, for each participant, in entering into synchronism with each message received from the participant who has ensured his initial synchronization, by way of correcting said synchronization in accordance with the transmission delay recorded by him.

5. A method according to claim 4, characterized in that it comprises an updating phase for updating the transmission delay.

6. A method according to any one of the preceding claims, characterized in that it comprises an additional phase, in which each participant prepares quality statistics about the transmission links to which he is connected, said phase being followed by a phase of transmission of said statistics to a same participant, and again followed by a phase of transmission of said statistics to all of the participants.

7. A method according to claim 6, characterized in that the routing phase is implemented by consulting a routing table prepared by each participant on reception of the statistics, and adapted to indicate the best ways of transmission existing between the participants, in accordance with the quality of the transmission links.

FIG_1-a

FIG_1-b

FIG_1-c

FIG_1-d

# FIG_2

EP 0 245 249 B1

| N° SEQUENCE | UNITE B1 | | | UNITE B2 | | | UNITE B3 | | |
|---|---|---|---|---|---|---|---|---|---|
| | $C_1$ | $U_{11}$ | $U_{12}$ | $C_2$ | $U_{21}$ | $U_{22}$ | $C_3$ | $U_{31}$ | $U_{32}$ |
| 1 | | | | | | | | | |
| 2 | | | | | | | | | |
| 3 | | | | | | | | | |
| 4 | | | | | | | | | |
| 5 | | | | | | | | | |
| 6 | | | | | | | | | |
| 7 | | | | | | | | | |
| 8 | | | | | | | | | |
| 9 | | | | | | | | | |
| 10 | | | | | | | | | |
| 11 | | | | | | | | | |
| 12 | | | | | | | | | |
| 13 | | | | | | | | | |
| 14 | | | | | | | | | |
| 15 | | | | | | | | | |
| 16 | | | | | | | | | |
| 17 | | | | | | | | | |
| 18 | | | | | | | | | |
| 19 | | | | | | | | | |

# FIG_3

| | | |
|---|---|---|
| 41 — MOTIF DE SYNCHRONISATION | | 52 |
| 42 — DESTINATAIRE | PR | 53 |
| 43 — N° DE SEQUENCE | PR | |
| 44 — FREQUENCE | N° DE MESSAGE | 45 |
| 46 — ORIGINE | TYPE | 47 |
| 48 — DONNEES | | 51 |
| 49 — DATE | | |
| 50 — CONTROLE | | |

P P P P P P P P P P P P P P P P P